# DEMANDE DE BREVET EUROPEEN

(11) **EP 4 238 818 A1**
(43) Date de publication de la demande: **06.09.2023**
(21) Numéro de dépôt: 23155444.5
(22) Date de dépôt: 07.02.2023
(51) Int. Cl.: B60N 2/75, B60N 2/90

(54) **SIÈGE DE VÉHICULE COMPRENANT UNE PAROI DE SÉPARATION MOBILE ET VÉHICULE ASSOCIÉ**

(30) Priorité: 09.02.2022 FR 2201134
(71) Demandeur: SpeedInnov, 75008 Paris (FR)
(72) Inventeur: BEAUSEIGNEUR, Christophe, 17540 FONTPATOUR DE VERINES (FR); PAILLER, Christophe, 17000 LA ROCHELLE (FR)
(74) Mandataire: Lavoix

(57) **Abrégé**

Le siège (12) comprend :
une assise (14),
un dossier (16) présentant une première face latérale (32),
une coque rigide (18) présentant un bord latéral (40), un logement de réception (42) étant défini entre ledit bord latéral (40) et la première face latérale (32),
un accoudoir (20) mobile entre une position rangée dans laquelle l'accoudoir (20) est reçu dans le logement de réception (42) et une position d'usage,
une paroi de séparation (22) mobile entre une position escamotée et une position déployée dans laquelle la paroi de séparation (22) s'étend entre la première face latérale (32) du dossier (16) et un bord avant libre (46) de l'accoudoir (20) en position d'usage.

La paroi de séparation (22) en position escamotée est logée dans le logement de réception (42).

## Description

La présente invention concerne un siège de véhicule, notamment de véhicule terrestre, comprenant :
une assise,
un dossier présentant une face avant, une face arrière opposée à la face avant et une première face latérale et une deuxième face latérale opposées et s'étendant chacune entre la face avant et la face arrière,
une coque rigide présentant une surface d'appui s'étendant en regard de la face arrière du dossier et au moins un bord latéral s'étendant sensiblement parallèlement et à distance de la première face latérale du dossier, un logement de réception étant défini entre ledit bord latéral et la première face latérale du dossier,
un accoudoir définissant un bord avant libre et un bord arrière fixé à la première face latérale du dossier, l'accoudoir étant mobile entre une position rangée dans laquelle l'accoudoir est reçu dans le logement de réception et une position d'usage dans laquelle l'accoudoir s'étend en saillie du logement de réception,
une paroi de séparation mobile entre une position escamotée et une position déployée dans laquelle la paroi de séparation s'étend entre la première face latérale du dossier et le bord avant libre de l'accoudoir en position d'usage.

Dans les véhicules de transport de passagers, dans un souci de gain d'espace, les sièges adjacents sont généralement sensiblement proches les uns des autres. En outre, les banquettes de sièges sont également proches les unes des autres et généralement séparées par un couloir de circulation de faible largeur. En conséquence, il peut s'avérer difficile pour un passager de s'isoler des autres passagers, ce qui réduit son confort.

Pour autoriser un isolement des passagers, il est connu d'installer des cloisons de séparations entre les sièges des passagers. Cependant, ces cloisons sont généralement encombrantes et réduisent donc l'espace disponible restant pour les passagers, ce qui nuit à leur confort. De plus, de telles cloisons ne sont pas modulables et ne permettent pas à des passagers voyageant ensemble de communiquer de façon ergonomique.

En outre, dans les véhicules de transport de passagers, les écrans de protection solaire sont généralement des stores partagés entre plusieurs rangées de sièges, ce qui peut être source de conflit et donc impacter le confort des passagers.

L'un des buts de l'invention est de proposer un siège de véhicule améliorant le confort des passagers.

A cet effet, l'invention concerne un siège de véhicule du type précité, dans lequel la paroi de séparation en position escamotée est logée dans le logement de réception.

La paroi de séparation en position déployée permet d'isoler le passager assis sur le siège des autres passagers et/ou de définir un écran de protection solaire si celle-ci s'étend entre ledit passager et une fenêtre du véhicule, ce qui permet d'améliorer le confort du passager.

En outre, l'escamotage de la paroi de séparation dans le logement de réception défini par la coque rigide permet de ranger la paroi de séparation de manière compacte et esthétique, la paroi de séparation n'étant sensiblement pas visible depuis l'extérieur du siège en position escamotée. La paroi de séparation offre en outre une modularité permettant à des passagers voyageant ensemble de partager un espace commun en plaçant la paroi de séparation entre ces passagers en position escamotée.

Selon des modes de réalisation particuliers de l'invention, le siège de véhicule présente l'une ou plusieurs des caractéristiques suivantes, prises indépendamment ou selon toute combinaison techniquement réalisable :
- la paroi de séparation se déploie en éventail de la position escamotée à la position déployée ;
- la paroi de séparation est opaque ;
- la paroi de séparation est fixée d'une part à la coque rigide de manière rigide et d'autre part à l'accoudoir de manière amovible ;
- la fixation amovible de la paroi de séparation sur l'accoudoir est réalisée par clipsage ou par coopération de bandes agrippantes ;
- le déplacement de l'accoudoir entre la position rangée et la position d'usage entraine le déplacement de la paroi de séparation entre la position escamotée et la position déployée lorsque la paroi de séparation est fixée à l'accoudoir ;
- le siège de véhicule comprend un deuxième accoudoir définissant un bord avant libre et un bord arrière fixé à la deuxième face latérale du dossier et une deuxième paroi de séparation mobile entre une position escamotée et une position déployée dans laquelle la deuxième paroi de séparation s'étend entre la deuxième face latérale du dossier et le bord avant libre du deuxième accoudoir en position d'usage ;
- les deux parois de séparation sont mobiles indépendamment l'une de l'autre entre la position escamotée et la position déployée.

L'invention concerne également un véhicule, notamment un véhicule terrestre, comprenant au moins un siège tel que décrit ci-dessus.

Selon un mode de réalisation particulier de l'invention, le véhicule présente, en outre, la caractéristique selon laquelle le véhicule comprend une banquette comprenant au moins deux sièges adjacents, chaque siège étant tel que décrit ci-dessus.

D'autres aspects et avantages de l'invention apparaîtront à la lecture de la description qui suit, donnée à titre d'exemple et faite en référence au dessin annexé, dans lequel :

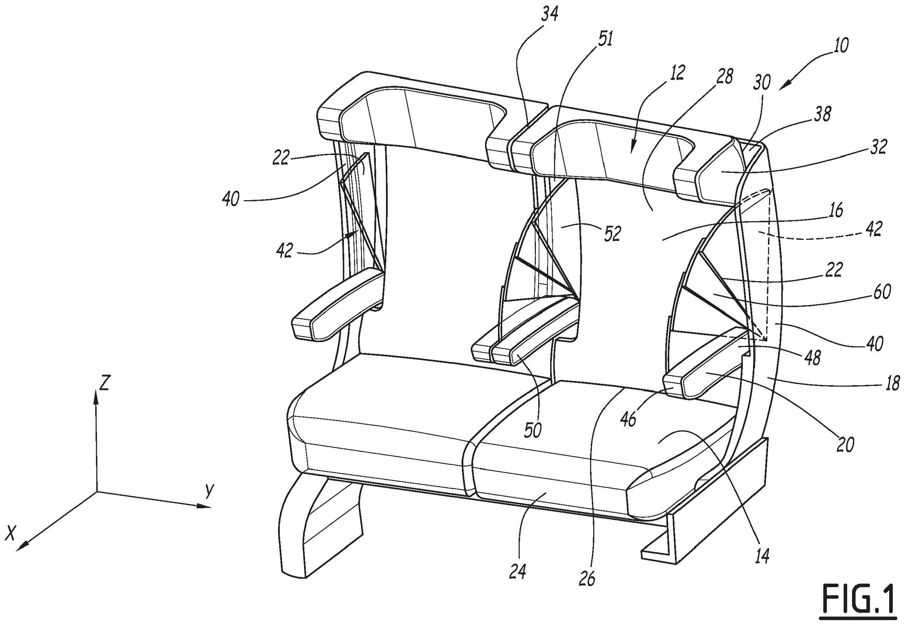

- [Fig 1] la figure 1 est une représentation schématique en perspective d'une banquette comprenant deux sièges adjacents selon l'invention.

La figure 1 illustre une banquette 10 propre à être agencée dans un véhicule, et notamment un véhicule terrestre, comme par exemple un bus ou un train.

La banquette 10 comprend au moins deux sièges 12 adjacents, et de préférence deux sièges 12 adjacents selon une direction transversale Y comme illustré sur la figure 1.

Dans tout ce qui suit, il est fait référence à une direction longitudinale X orthogonale à la direction transversale Y et correspondant à la direction de circulation du véhicule dans lequel est installé le siège et une direction d'élévation Z correspondant à la hauteur du véhicule, comme représenté sur la figure 1.

De plus, dans tout ce qui suit, par les termes « sensiblement selon une direction », « sensiblement parallèle » et « sensiblement perpendiculaire », on entend respectivement « selon une direction », « parallèle à » et « perpendiculaire à » à 10° près, et notamment à 5° près.

Un des sièges 12 de la banquette 10 est par exemple destiné à être agencé contre une paroi latérale du véhicule et notamment en regard d'une fenêtre du véhicule. L'autre des sièges 12 de la banquette 10 est par exemple destiné à être agencé en regard d'un couloir de circulation des passagers dans le véhicule.

Chaque siège 12 comprend une assise 14, un dossier 16, une coque rigide 18, un accoudoir 20 et une paroi de séparation 22.

L'assise 14 définit une surface d'assise destinée notamment à être en contact avec les cuisses d'un passager assis sur le siège 12.

L'assise 14 s'étend sensiblement dans un plan XY parallèle à la direction longitudinale X et à la direction transversale Y. L'assise 14 présente un bord avant 24 et un bord arrière 26 espacés l'un de l'autre selon la direction longitudinale X.

Le dossier 16 est solidaire de l'assise 14 et plus particulièrement au voisinage du bord arrière 26 de l'assise.

Le dossier 16 présente une face avant 28 et une face arrière 30 opposée à la face avant 28, et plus particulièrement espacées l'une de l'autre selon la direction longitudinale X.

Le dossier 16 présente, en outre, une première face latérale 32 et une deuxième face latérale 34 opposées et s'étendant chacune entre la face avant 28 et la face arrière 30. Plus particulièrement, les deux faces latérales 32, 34 du dossier 16 sont espacées l'une de l'autre selon la direction transversale Y.

En particulier dans le mode de réalisation illustré sur la figure 1, les deuxièmes faces latérales 34 des sièges 12 de la banquette 10 s'étendent par exemple vers l'intérieur de la banquette 10 et plus particulièrement en regard et à proximité l'une de l'autre, et les premières faces latérales 32 des sièges 12 de la banquette 10 s'étendent vers l'extérieur de la banquette 10. Par exemple, la première face latérale 32 de l'un des sièges 12 s'étend en regard d'une fenêtre du véhicule et la première face latérale 32 de l'autre des sièges 12 s'étend en regard d'un couloir de circulation du véhicule.

La coque rigide 18 définit un support de maintien et de protection du dossier 16 du siège 12.

La coque rigide 18 est avantageusement réalisée en un matériau rigide, par exemple un matériau plastique. Par rigide, on entend que la coque rigide 18 conserve sa forme et ne se déforme pas sous l'effet d'une contrainte usuelle dans un véhicule, par exemple lorsqu'un passager s'appuie dessus ou exerce une force de traction sur la coque rigide 18.

La coque rigide 18 présente une surface d'appui 38 s'étendant en regard de la face arrière 30 du dossier 16 et au moins un bord latéral 40 s'étendant sensiblement parallèlement et à distance de la première face latérale 32 du dossier 16.

La surface d'appui 38 de la coque rigide 18 est sensiblement plane et s'étend sensiblement dans un plan vertical YZ parallèle à la direction d'élévation Z et à la direction transversale Y.

La face arrière 30 du dossier 16 est par exemple collée sur la surface d'appui 38 de la coque rigide 18.

Le bord latéral 40 de la coque rigide 18 s'étend sensiblement dans un plan vertical XZ parallèle à la direction d'élévation Z et à la direction longitudinale X.

Le bord latéral 40 de la coque rigide 18 s'étend à distance de la première face latérale 32 du dossier 16 selon la direction transversale Y, par exemple à une distance comprise entre 2 cm et 10 cm.

Un logement de réception 42 est ainsi défini entre le bord latéral 40 de la coque rigide 18 et la première face latérale 32 du dossier 16.

En particulier dans le mode de réalisation illustré sur la figure 1, la coque rigide 18 est commune aux deux sièges 12 et est de préférence en forme de baquet. Plus particulièrement, la surface d'appui 38 s'étend de manière continue en regard des dossiers 16 des deux sièges 12 et les bords latéraux 40 de la coque rigide 18 sont définis en regard des premières faces latérales 32 des dossiers 16, et plus particulièrement un en regard d'une fenêtre du véhicule et l'autre en regard d'un couloir de circulation du véhicule.

L'accoudoir 20 définit un bord avant libre 46 et un bord arrière 48 fixé à la première face latérale 32 du dossier 16.

Plus particulièrement, l'accoudoir 20 est fixé au dossier 16, de manière mobile en rotation autour d'un axe parallèle à la direction transversale Y entre une position rangée et une position d'usage.

En position rangée, l'accoudoir 20 s'étend sensiblement selon la direction d'élévation Z.

Plus particulièrement, l'accoudoir 20 en position rangée est reçu dans le logement de réception 42 défini entre le bord latéral 40 de la coque rigide 18 et la première face latérale 32 du dossier 16.

En position rangée, l'accoudoir 20 est ainsi escamoté dans le logement de réception 42.

En position d'usage, l'accoudoir 20 en saillie du logement de réception 42, par exemple sensiblement selon la direction longitudinale X.

De préférence, l'accoudoir 20 en position d'usage définit une surface d'appui d'un coude et/ou d'un avant-bras d'un passager assis sur le siège 12.

La paroi de séparation 22 est mobile entre une position escamotée et une position déployée.

La paroi de séparation 22 en position déployée s'étend entre la première face latérale 32 du dossier 16 et le bord avant libre 46 de l'accoudoir 20 en position d'usage.

En position déployée, la paroi de séparation 22 s'étend dans un plan XZ parallèle à la direction d'élévation Z et à la direction longitudinale X, comme représenté à droite sur la figure 1. La paroi de séparation 22 en positon déployée forme ainsi un écran de protection solaire par exemple dans le cas où la première face latérale 32 du dossier 16 est en regard d'une fenêtre du véhicule et/ou un écran d'isolement des autres passagers par exemple dans le cas où la première face latérale 32 du dossier 16 est en regard d'un couloir de circulation et/ou d'un autre siège du véhicule.

La paroi de séparation 22 en position escamotée est logée dans le logement de réception 42 défini entre le bord latéral 40 de la coque rigide 18 et la première face latérale 32 du dossier 16.

Comme illustré sur le siège 12 à gauche de la figure 1, la paroi de séparation 22 en position escamotée est masquée derrière le bord latéral 40 de la coque rigide 18.

La paroi de séparation 22 est ainsi rangée de manière compacte dans le même logement de réception 42 que l'accoudoir 20.

La paroi de séparation 22 est fixée d'une part à la coque rigide 18 de manière rigide et d'autre part à l'accoudoir 20 de manière amovible.

Par une fixation amovible, on entend une fixation qui peut être fixée et détachée à plusieurs reprises et qui autorise un détachement non destructif. Au contraire, par une fixation rigide, on entend une fixation qui n'autorise pas un détachement non destructif.

La paroi de séparation 22 est par exemple collée à la coque rigide 18, et plus particulièrement au bord latéral 40.

La fixation amovible de la paroi de séparation 22 sur l'accoudoir 20 est de préférence réalisée par clipsage ou par coopération de bandes agrippantes. En variante, la fixation amovible de la paroi de séparation 22 sur l'accoudoir 20 est réalisée par coopération d'aimants.

La fixation de la paroi de séparation 22 sur l'accoudoir 20 autorise un maintien de la paroi de séparation 22 en position déployée.

Lorsque la paroi de séparation 22 est fixée à l'accoudoir 20, le déplacement de l'accoudoir 20 entre la position rangée et la position d'usage entraine le déplacement de la paroi de séparation 22 entre la position escamotée et la position déployée.

Lorsque la paroi de séparation 22 n'est pas fixée à l'accoudoir 20, la paroi de séparation 22 et l'accoudoir 20 sont mobiles indépendamment l'un de l'autre.

Par exemple, l'accoudoir 20 peut être placé en position d'usage, tout en laissant la paroi de séparation 22 en position escamotée.

De préférence, la paroi de séparation 22 se déploie en éventail de la position escamotée à la position déployée.

Comme illustré sur la figure 1, la paroi de séparation 22 est par exemple constituée d'une pluralité de panneaux 60 fixés de manière mobile en rotation autour d'un axe parallèle à la direction transversale Y à la coque rigide.

En position escamotée, les panneaux 60 sont superposés les uns sur les autres. En position déployée, les panneaux 60 sont déployés et décalés les uns des autres de sorte à former un arc de cercle s'étendant entre le bord latéral 40 de la coque rigide 18 et l'accoudoir 20.

En variante, la paroi de séparation 22 présente par exemple une pluralité de plis dans la position escamotée, les plis se dépliant lorsque la paroi de séparation 22 se déploie vers la position déployée.

La paroi de séparation 22 est avantageusement opaque de sorte à assurer sa fonction d'isolation et/ou de pare-soleil.

De préférence, la paroi de séparation 22 présente un facteur de transmission solaire inférieur à 15%. Le facteur de transmission solaire représente la proportion du rayonnement solaire qui est apte à traverser la paroi de séparation 22.

La paroi de séparation 22 est par exemple fabriquée en tissu ou en plastique souple.

Chaque siège 12 comprend avantageusement un deuxième accoudoir 50 fixé à la deuxième face latérale 34 du dossier 16.

Le deuxième accoudoir 50 est similaire à l'accoudoir 20 et définit un bord avant libre 46 et un bord arrière 48 fixé à la deuxième face latérale 34 du dossier 16, et de préférence de manière mobile en rotation entre une position rangée et une position d'usage.

En position rangée, le deuxième accoudoir 50 s'étend contre la surface d'appui 38 de la coque rigide 18.

Plus particulièrement, dans le mode de réalisation illustré sur la figure 1, le deuxième accoudoir 50 s'étend entre les deuxièmes faces latérales 34 des dossiers 16 des deux sièges adjacents 12 de la banquette 10.

Avantageusement, un logement supplémentaire 51 est défini entre les deuxièmes faces latérales 34 des dossiers 16 des deux sièges 12 de la banquette 10, pour recevoir le deuxième accoudoir 50 en position rangée.

Avantageusement, le siège 12 comprend une deuxième paroi de séparation 52 à proximité de la deuxième face latérale 34 du dossier 16.

La deuxième paroi de séparation 52 est sensiblement similaire à la paroi de séparation 22 de l'accoudoir 20 de la première face latérale 32 du dossier 16.

La deuxième paroi de séparation 52 est fixée par exemple d'une part à la coque rigide 18 de manière rigide et d'autre part au deuxième accoudoir 50 de manière amovible.

La deuxième paroi de séparation 52 est avantageusement également mobile entre une position escamotée et une position déployée dans laquelle la deuxième paroi de séparation 52 s'étend entre la deuxième face latérale 32 du dossier 16 et le bord avant libre 46 du deuxième accoudoir 50 en position d'usage.

La deuxième paroi de séparation 52 en positon déployée forme un écran d'isolement du passager assis sur le siège 12 par rapport au passager assis sur le siège adjacente la banquette 10.

Avantageusement, la deuxième paroi de séparation 52 en positon escamotée est reçu dans le logement supplémentaire 51 défini entre les deux sièges 12 de la banquette 10.

De préférence, les deux parois de séparation 22, 52 sont mobiles indépendamment l'une de l'autre entre la position escamotée et la position déployée.

En variante de l'invention non-illustrée, la banquette 10 comprend au moins trois sièges. Dans ce cas, les accoudoirs et les parois des séparations du ou des sièges centraux sont escamotés dans des logements définis entre les faces latérales 32, 34 des dossiers 16 du siège central et des sièges de chaque côté.

En variante de l'invention non-illustrée, le siège 12 est un siège individuel. La coque rigide 18 est par exemple en forme de baquet avec un deuxième bord latéral 40 définissant ainsi un deuxième logement de réception propre à recevoir le deuxième accoudoir 50 et la deuxième paroi de séparation 52.

## Revendications

1. Siège (12) de véhicule, notamment de véhicule terrestre, comprenant :
une assise (14),
un dossier (16) présentant une face avant (28), une face arrière (30) opposée à la face avant (28) et une première face latérale (32) et une deuxième face latérale (34) opposées et s'étendant chacune entre la face avant (28) et la face arrière (30),
une coque rigide (18) présentant une surface d'appui (38) s'étendant en regard de la face arrière (30) du dossier (16) et au moins un bord latéral (40) s'étendant sensiblement parallèlement et à distance de la première face latérale (32) du dossier (16), un logement de réception (42) étant défini entre ledit bord latéral (40) et la première face latérale (32) du dossier (16),
un accoudoir (20) définissant un bord avant libre (46) et un bord arrière (48) fixé à la première face latérale (32) du dossier (16), l'accoudoir (20) étant mobile entre une position rangée dans laquelle l'accoudoir (20) est reçu dans le logement de réception (42) et une position d'usage dans laquelle l'accoudoir (20) s'étend en saillie du logement de réception (42),
une paroi de séparation (22) mobile entre une position escamotée et une position déployée dans laquelle la paroi de séparation (22) s'étend entre la première face latérale (32) du dossier (16) et le bord avant libre (46) de l'accoudoir (20) en position d'usage,
**caractérisé en ce que** la paroi de séparation (22) en position escamotée est logée dans le logement de réception (42).

2. Siège de véhicule selon la revendication 1, dans lequel la paroi de séparation (22) se déploie en éventail de la position escamotée à la position déployée.

3. Siège de véhicule selon la revendication 1 ou 2, dans lequel la paroi de séparation est opaque.

4. Siège de véhicule selon l'une des revendications précédentes, dans lequel la paroi de séparation (22) est fixée d'une part à la coque rigide (18) de manière rigide et d'autre part à l'accoudoir (20) de manière amovible.

5. Siège de véhicule selon la revendication 4, dans lequel la fixation amovible de la paroi de séparation (22) sur l'accoudoir (20) est réalisée par clipsage ou par coopération de bandes agrippantes.

6. Siège de véhicule selon la revendication 4 ou 5, dans lequel le déplacement de l'accoudoir (20) entre la position rangée et la position d'usage entraine le déplacement de la paroi de séparation (22) entre la position escamotée et la position déployée lorsque la paroi de séparation (22) est fixée à l'accoudoir (20).

7. Siège de véhicule selon l'une des revendications précédentes comprenant un deuxième accoudoir (50) définissant un bord avant libre et un bord arrière fixé à la deuxième face latérale (34) du dossier (16) et une deuxième paroi de séparation (52) mobile entre une position escamotée et une position déployée dans laquelle la deuxième paroi de séparation (52) s'étend entre la deuxième face latérale (34) du dossier (16) et le bord avant libre du deuxième accoudoir (50) en position d'usage.

8. Siège de véhicule selon la revendication 7, dans lequel les deux parois de séparation (22, 52) sont mobiles indépendamment l'une de l'autre entre la position escamotée et la position déployée.

9. Véhicule, notamment véhicule terrestre, comprenant au moins un siège (12) selon l'une des revendications précédentes.

10. Véhicule selon la revendication 9, dans lequel le véhicule comprend une banquette (10) comprenant au moins deux sièges (12) adjacents, chaque siège étant selon l'une quelconque des revendications 1 à 8.
